# EUROPÄISCHE PATENTANMELDUNG

(11) **EP 4 389 659 A1**
(43) Veröffentlichungstag der Anmeldung: **26.06.2024**
(21) Anmeldenummer: 23215784.2
(22) Anmeldetag: 12.12.2023
(51) Int. Cl.: B65G 57/03

(54) **VORRICHTUNG UND VERFAHREN ZUM KOMMISSIONIEREN**

(30) Priorität: 19.12.2022 DE 102022213844
(71) Anmelder: Winkel GmbH, 75428 Illingen (DE)
(72) Erfinder: Loupas, Athanasios, 75417 Mühlacker (DE); Weisser, Alexander, 75180 Pforzheim (DE)
(74) Vertreter: Patentanwälte Ruff, Wilhelm, Beier, Dauster & Partner mbB

(57) **Zusammenfassung**

Die Erfindung betrifft eine Vorrichtung zum Kommissionieren auf Paletten oder Warenträgern mit einem Kommissionierschacht, mit einem Palettenzwischenspeicher für unbeladene Paletten, wobei der Palettenzwischenspeicher seitlich neben dem Kommissionierschacht angeordnet ist, mit einer Zuführeinrichtung für den Transport jeweils einer unbeladenen Palette vom Kommissionierschacht in den Palettenzwischenspeicher oder vom Palettenzwischenspeicher in den Kommissionierschacht, wobei der Palettenzwischenspeicher wenigstens zwei Speicherplätze für Paletten unterschiedlicher Größe aufweist.

## Beschreibung

Die Erfindung betrifft eine Vorrichtung zum Kommissionieren auf Paletten oder Warenträgern mit einem Kommissionierschacht, mit einem Palettenzwischenspeicher für unbeladene Paletten, wobei der Palettenzwischenspeicher seitlich neben dem Kommissionierschacht angeordnet ist und mit einer Zuführeinrichtung für den Transport jeweils einer unbeladenen Palette vom Kommissionierschacht in den Palettenzwischenspeicher oder vom Palettenzwischenspeicher in den Kommissionierschacht. Die Erfindung betrifft auch ein Verfahren zum Kommissionieren.

Aus der deutschen Patentschrift DE 10 2014 220 046 B4 ist eine Vorrichtung zum Kommissionieren auf Paletten oder Warenträgern bekannt, die einen neben einem Kommissionierschacht angeordneten Palettenzwischenspeicher für eine unbeladene Palette aufweist. Mittels des Palettenzwischenspeichers ist es möglich, unmittelbar nachdem die fertig beladene Palette im Kommissionierschacht nach unten abgefördert wurde eine unbeladene Palette wieder auf Höhe der Kommissionierebene anzuordnen, so dass diese neue Palette bereits wieder beladen werden kann, während die vorhergehende voll beladene Palette beispielsweise umreift oder mit Stretchfolie umwickelt und dann abtransportiert wird.

Mit der Erfindung sollen eine Vorrichtung und Verfahren zum Kommissionieren auf Paletten oder Warenträgern hinsichtlich der Flexibilität ihres Einsatzes verbessert werden.

Erfindungsgemäß ist hierzu eine Vorrichtung zum Kommissionieren auf Paletten oder Warenträgern mit den Merkmalen von Anspruch 1 vorgesehen. Darüber hinaus ist ein Verfahren zum Kommissionieren auf Paletten oder Warenträgern mit den Merkmalen von Anspruch 10 vorgesehen. Vorteilhafte Weiterbildungen der Erfindung sind in den Unteransprüchen aufgeführt.

Eine erfindungsgemäße Vorrichtung zum Kommissionieren auf Paletten oder Warenträgern weist einen Kommissionierschacht, einen Palettenzwischenspeicher für unbeladene Paletten, wobei der Palettenzwischenspeicher seitlich neben dem Kommissionierschacht angeordnet ist, und eine Zuführeinrichtung für den Transport jeweils einer unbeladenen Palette vom Kommissionierschacht in den Palettenzwischenspeicher oder vom Palettenzwischenspeicher in den Kommissionierschacht auf. Der Palettenzwischenspeicher weist wenigstens zwei Speicherplätze für Paletten oder Warenträger unterschiedlicher Größe auf. Dadurch können mit der Vorrichtung zum Kommissionieren Paletten oder Warenträger unterschiedlicher Größe wahlweise und unmittelbar hintereinander beladen werden. Denn der Palettenzwischenspeicher wird genutzt, um eine unbeladene Palette außerhalb des Kommissionierschachts zwischenzuspeichern, um diese unmittelbar nach dem Absenken einer vollständig beladenen Palette im Kommissionierschacht wieder auf Höhe der Kommissionierebene anzuordnen. Dies kann geschehen, noch während die vollständig beladene Palette im Kommissionierschacht nach unten abgefahren wird oder beispielsweise umreift oder mit Stretchfolie umwickelt wird. Indem der Palettenzwischenspeicher wenigstens zwei Speicherplätze für Paletten unterschiedlicher Größe aufweist, können Paletten unterschiedlicher Größe abwechselnd und unmittelbar hintereinander ohne irgendwelche Rüstzeiten beladen werden. Die erfindungsgemäße Vorrichtung zum Kommissionieren ist dadurch in äußerst flexibler Weise einsetzbar.

In Weiterbildung der Erfindung sind die wenigstens zwei Speicherplätze im Palettenzwischenspeicher in Höhenrichtung des Kommissionierschachts übereinander angeordnet.

Auf diese Weise ist es möglich, die unterschiedlichen Paletten ohne Zeitverzögerung und ohne Umstellen oder Umrangieren von Paletten im Palettenzwischenspeicher in den Kommissionierschacht einzubringen. Dadurch können kurze Zykluszeiten realisiert werden.

In Weiterbildung der Erfindung ist eine Hub- und Absenkeinrichtung vorgesehen, um eine unbeladene Palette bis auf Höhe des Palettenzwischenspeichers zu bewegen.

Eine unbeladene Palette kann dadurch in einen Speicherplatz des Palettenzwischenspeichers eingelagert werden, während eine Palette beladen wird.

In Weiterbildung der Erfindung weist der Kommissionierschacht wenigstens eine erste verstellbare Schachtwand auf, wobei mittels der ersten verstellbaren Schachtwand ein freier Querschnitt des Kommissionierschachts mittels einer Bewegung der ersten verstellbaren Schachtwand senkrecht zur Höhenrichtung des Kommissionierschachts wenigstens abschnittsweise verändert werden kann, wobei die erste verstellbare Schachtwand in Höhenrichtung des Kommissionierschachts einen oberen Abschnitt und einen unteren Abschnitt aufweist, wobei der obere Abschnitt sich von einer Höhenposition des Palettenzwischenspeichers bis zu einer Kommissionierebene am oberen Ende des Kommissionierschachts erstreckt, wobei der untere Abschnitt sich ausgehend von der Höhenposition des Palettenzwischenspeichers nach unten erstreckt und wobei der obere Abschnitt und der untere Abschnitt unabhängig voneinander verstellbar sind.

Mittels der ersten verstellbaren Schachtwand kann der freie Querschnitt des Kommissionierschachts so eingestellt werden, dass die Wände des Kommissionierschachts nur in einem sehr geringen Abstand von den Seitenkanten der Palette, die gerade beladen wird, angeordnet sind. Dadurch wird verhindert, dass Ladegut, das auf der Palette positioniert wird, seitlich neben der Palette in den Kommissionierschacht hineinfällt. Dies ist dann, wenn auf Paletten mit unterschiedlicher Größe kommissioniert werden soll, äußerst vorteilhaft. Denn ein Kommissionierer und/oder ein Kommissionierroboter müssen dadurch nicht extrem sorgfältig darauf achten, das Ladegut exakt am Rand der Palette zu positionieren.

Indem die erste verstellbare Schachtwand einen oberen Abschnitt und einen unteren Abschnitt aufweist, die unabhängig voneinander verstellbar sind, wird es möglich, gleichzeitig eine erste Palette mit einer ersten Größe mit Ladegut zu beladen und eine zweite Palette mit unterschiedlicher Größe von unten her in den Kommissionierschacht einzufahren und dann im Palettenzwischenspeicher zu platzieren. Die in den Palettenzwischenspeicher einzubringende Palette ist nicht beladen, so dass hier nicht die Gefahr besteht, dass Ladegut von der Palette herunterfällt. Wenn aber beispielsweise eine erste Palette kleiner Größe beladen wird, wird in der Regel immer eine unbeladenen Palette kleiner Größe in den Palettenzwischenspeicher eingebracht, so dass immer zwei Paletten unterschiedlicher Größe im Palettenzwischenspeicher angeordnet sind. Ein Kommissionierer oder auch Leitrechner hat dann immer die Wahl, ob als Nächstes eine große oder kleine Palette beladen werden soll. Auch wenn diese Auswahl erst getroffen wird, wenn die vorhergehende Palette beladen ist, werden bei der erfindungsgemäßen Vorrichtung keine Wartezeichen verursacht. Wenn eine erste Palette kleinerer Größe beladen wird, können der obere Abschnitt und der untere Abschnitt der ersten verstellbaren Schachtwand dann, wenn die Palette beladen und dann schrittweise abgesenkt wird, unmittelbar angrenzend an das Ladegut auf der Palette angeordnet werden, um zu verhindern, dass während des schrittweisen Absenkens Ladegut auf der Palette verrutscht oder gar herunterfällt.

In Weiterbildung der Erfindung ist der obere Abschnitt der verstellbaren Schachtwand mit einem Abschnitt der Kommissionierebene verbunden.

Auf diese Weise wird eine Kante zwischen der horizontal angeordneten Kommissionierebene und der vertikal angeordneten ersten verstellbaren Schachtwand beim Verstellen der ersten Schachtwand mit verschoben. Für einen Kommissionierer oder einen Kommissionierroboter steht dadurch im Bereich der ersten verstellbaren Schachtwand immer eine Kante bzw. ein Anschlag zur Verfügung, um Ladegut schnell und exakt auf der zu beladenden Palette oder auf bereits gestapeltem Ladegut anzuordnen.

In Weiterbildung der Erfindung ist eine zweite, wenigstens abschnittsweise verstellbare Schachtwand vorgesehen, wobei die zweite verstellbare Schachtwand senkrecht zu der ersten verstellbaren Schachtwand angeordnet ist und wobei mittels der zweiten verstellbaren Schachtwand ein freier Querschnitt des Kommissionierschachts mittels einer Bewegung der zweiten verstellbaren Schachtwand senkrecht zur Höhenrichtung des Kommissionierschachts wenigstens abschnittsweise verändert werden kann.

Mittels einer zweiten verstellbaren Schachtwand, die senkrecht zu der ersten verstellbaren Schachtwand angeordnet ist, wird es möglich, Paletten unterschiedlicher Größe zu verarbeiten, bei denen beide Querabmessungen unterschiedlich sind. Auch in einem solchen Fall kann dann sichergestellt werden, dass die Wände des Kommissionierschachts unmittelbar angrenzend an die Kanten der Ladefläche der Palette angeordnet sind, so dass kein Ladegut von der Palette herunterrutschen und in den Kommissionierschacht fallen kann.

In Weiterbildung der Erfindung ist eine dritte, wenigstens abschnittsweise verstellbare Schachtwand vorgesehen, wobei die dritte verstellbare Schachtwand senkrecht zu der ersten verstellbaren Schachtwand angeordnet ist und wobei mittels der dritten verstellbaren Schachtwand ein freier Querschnitt des Kommissionierschachts mittels einer Bewegung der dritten verstellbaren Schachtwand senkrecht zur Höhenrichtung des Kommissionierschachts wenigstens abschnittsweise verändert werden kann.

Wird auf Paletten unterschiedlicher Größe kommissioniert, sind unterschiedliche Fälle zu betrachten: haben die unterschiedlichen Paletten eine gleiche Querabmessung, genügt eine verstellbare Schachtwand, um den freien Querschnitt des Kommissionierschachts auf die Größe der gerade beladenen Palette einzustellen. Ist hingegen bei den unterschiedlichen Paletten keine Querabmessung identisch, kann der Fall auftreten, dass zum Verarbeiten der beiden Paletten unterschiedlicher Größe es vorteilhaft ist, drei Schachtwände des Kommissionierschachts einzustellen. Dies kann beispielsweise dann der Fall sein, wenn die Paletten mit ihrem Flächenschwerpunkt immer mittig zum freien Querschnitt des Kommissionierschachts angeordnet sein sollen oder auch dann, wenn Standfüße der Paletten so platziert sind, dass sich der Abstand von den Standfüßen der unterschiedlichen Paletten zu den Schachtwänden des Kommissionierschachts zwischen unterschiedlichen Paletten ändert. Mittels einer ersten, zweiten und dritten verstellbaren Schachtwand kann dann sichergestellt werden, dass alle vier Schachtwände des Kommissionierschachts unmittelbar angrenzend an die Kanten der Ladefläche der Palette angeordnet sind.

In Weiterbildung der Erfindung sind Mittel zum Halten und Bewegen einer Palette im oberen Abschnitt des Kommissionierschachts zwischen einer Höhenposition des Palettenzwischenspeichers und einem oberen Ende des Kommissionierschachts vorgesehen, wobei die Mittel zum Halten und Bewegen ausgebildet und angeordnet sind, eine unbeladene Palette aus dem Palettenzwischenspeicher von der Zuführeinrichtung zu übernehmen, die unbeladene Palette bis zum oberen Ende des Kommissionierschachts zu bewegen und während eines Beginns des Ladevorgangs die Palette schrittweise abzusenken, bis die Palette von den Mitteln zum Halten und Bewegen an eine Hub- und Absenkvorrichtung übergeben wird, wobei die Mittel zum Halten und Bewegen mehrere Palettenauflager aufweisen, die in einen freien Querschnitt des Kommissionierschachts hinein und aus dem freien Querschnitt heraus bewegbar sind und wobei die Palettenauflager unterhalb einer Standfläche für einen Kommissionierer oder einen Kommissionierroboter in den freien Querschnitt des Kommissionierschachts hinein und wieder heraus bewegbar sind.

Mittels solcher Mittel zum Halten und Bewegen kann eine unbeladene Palette von der Höhenposition des Palettenzwischenspeichers bis zum oberen Ende des Kommissionierschachts bewegt werden, bis also die Ladefläche der Palette in etwa auf Höhe oder kurz unterhalb der Kommissionierebene angeordnet ist. Diese Mittel zum Halten und Bewegen sind dabei unabhängig von einer Hub- und Absenkvorrichtung, die unbeladene Paletten von einer zuführenden Fördertechnik übernimmt, in den Kommissionierschacht von unten her einfährt und dann an die Zuführeinrichtung des Palettenzwischenspeichers übergibt. Die Hub- und Absenkvorrichtung übernimmt auch teilweise beladene Paletten von den Mitteln zum Halten und Bewegen, um diese beim weiteren Beladen entweder schrittweise abzusenken oder vollständig beladene Paletten im Kommissionierschacht nach unten zu bewegen, um diese vollständig beladenen Paletten dann beispielsweise umreifen oder mit Stretchfolie umwickeln zu können. Die Hub- und Absenkeinrichtung ist weiter dafür vorgesehen, die vollständig beladenen und fertiggestellten Paletten dann wieder auf eine abführende Fördertechnik zu übergeben. Das Zusammenspiel einerseits der Hub- und Absenkvorrichtung und andererseits der Mittel zum Halten und Bewegen ermöglicht es, noch während des Abtransports bzw. Umreifens oder Umwickelns einer vollständig beladenen Palette, eine unbeladene Palette aus dem Palettenzwischenspeicher zu übernehmen und auf Höhe oder kurz unterhalb der Höhe der Kommissionierebene anzuordnen, um ohne Zeitverlust weiter kommissionieren zu können. Indem die Mittel zum Halten und Bewegen mehrere Palettenauflager aufweisen, die in einen freien Querschnitt des Kommissionierschachts hinein und aus dem freien Querschnitt heraus bewegbar sind, wobei die Palettenauflager unterhalb einer Standfläche für einen Kommissionierer oder einen Kommissionierroboter in den freien Querschnitt des Kommissionierschachts hinein und wieder heraus bewegbar sind, können beispielsweise drei Wände des Kommissionierschachts in Querrichtung sehr schmal ausgeführt werden. Die Innenseiten dieser Wände bilden die Schachtwände des Kommissionierschachts. Dadurch wird eine sehr gute Ergonomie ermöglicht, da ein Kommissionierer sehr nahe an der zu beladenden Palette stehen kann und sich insbesondere nicht über eine sehr breite Wand des Kommissionierschachts beugen muss, um Ladegut auf die Ladefläche der Palette zu bewegen. Die Palettenauflager werden infolgedessen unterhalb einer Standfläche der Kommissionierbühne in den freien Querschnitt des Kommissionierschachts hineinbewegt und auch unterhalb der Standfläche der Kommissionierbühne wieder aus dem freien Querschnitt des Kommissionierschachts herausbewegt. Oberhalb der Standfläche der Kommissionierbühne sind die Palettenauflager immer so angeordnet, dass sie in den freien Querschnitt des Kommissionierschachts hineinragen, und können infolgedessen oberhalb der Standfläche der Kommissionierbühne lediglich in Höhenrichtung, also in Richtung auf die Kommissionierebene und wieder von der Kommissionierebene weg, bewegt werden. Die Palettenauflager können beispielsweise in den freien Querschnitt des Kommissionierschachts eingeschwenkt werden und dann mittels einer geeigneten Höhenverstellung nach oben gefahren und wieder nach unten gefahren werden. Unterhalb der Standfläche der Kommissionierbühne steht dabei genügend Platz zur Verfügung, um die Palettenauflager in einfacher Weise aus dem freien Querschnitt des Kommissionierschachts herauszubewegen, beispielsweise herauszuschwenken oder auch mittels einer Verschiebebewegung oder entlang einer Kurvenbahn herauszubewegen.

In Weiterbildung der Erfindung sind die Palettenauflager oberhalb der Standfläche für einen Kommissionierer oder einen Kommissionierroboter ausschließlich in und entgegen der Höhenrichtung des Kommissionierschachts bewegbar.

Das der Erfindung zugrunde liegende Problem wird auch durch ein Verfahren zum Kommissionieren auf Paletten oder Warenträgern mit einer erfindungsgemäßen Vorrichtung gelöst.

Bei dem erfindungsgemäßen Verfahren ist unter anderem vorgesehen, dass während eine Palette beladen wird, eine weitere unbeladene Palette von unten her in den Kommissionierschacht eingebracht und mittels der Zuführeinrichtung dann in einen der Speicherplätze des Palettenzwischenspeichers bewegt wird. Je nachdem, welche Palettengröße als nächstes beladen werden soll, wird eine Palette dieser Größe mittels der Zuführeinrichtung von einem der Speicherplätze des Palettenzwischenspeichers in den Kommissionierschacht eingebracht und durch die Mittel zum Halten und Bewegen nach oben bis zur Kommissionierebene bewegt. Während des Beladens der Palette wird die Palette dann durch die Mittel zum Halten und Bewegen schrittweise nach unten abgesenkt, entsprechend der Höhe des bereits auf der Palette gestapelten Ladeguts. Bei dem erfindungsgemäßen Verfahren werden dann je nach der Größe der zu beladenden Palette und je nach Größe der in den Zwischenspeicher einzubringenden unbeladenen Palette die Schachtwände des Kommissionierschachts verstellt. Das Verstellen einer ersten verstellbaren Schachtwand des Kommissionierschachts erfolgt dabei in einem oberen Abschnitt und einem unteren Abschnitt der ersten verstellbaren Schachtwand unabhängig voneinander. Dadurch kann beispielsweise eine kleine Palette bereits beladen werden und eine große Palette kann nach unten durch den Kommissionierschacht abgesenkt werden. Das Einlagern der unbeladenen Paletten in den Palettenzwischenspeicher erfolgt zweckmäßigerweise übereinander, so dass Paletten unterschiedlicher Größe von ihrem jeweiligen Speicherplatz unmittelbar in den Kommissionierschacht hineinbewegt werden können, ohne zuvor im Palettenzwischenspeicher umzusortieren oder umrangieren zu müssen.

Bei dem erfindungsgemäßen Verfahren werden Palettenauflager der Mittel zum Halten und Bewegen unterhalb einer Standfläche für einen Kommissionierer oder Kommissionierroboter auf der Kommissionierbühne in den freien Querschnitt des Kommissionierschachts eingeschwenkt und dann zum Bewegen einer unbeladenen Palette nach oben bis zur Kommissionierebene und nachfolgend beim schrittweisen Absenken einer Palette ausschließlich in Höhenrichtung oder entgegen der Höhenrichtung des Kommissionierschachts bewegt. Dadurch können mindestens eine, gegebenenfalls auch mehrere Wände des Kommissionierschachts quer zur Höhenrichtung gesehen schmal ausgebildet sein, so dass sich für einen Kommissionierer eine sehr gute Ergonomie ergibt. Der Kommissionierer muss sich dadurch, dass wenigstens eine Begrenzungswand des Kommissionierschachts sehr schmal ausgebildet ist, nicht weit über diese Wand beugen, sondern kann Ladegut mit einer kurzen und schnellen Bewegung nahe am Körper auf die Palette bewegen.

Weitere Merkmale und Vorteile der Erfindung ergeben sich aus der nachfolgenden Beschreibung einer bevorzugten Ausführungsform der Erfindung im Zusammenhang mit den Zeichnungen. In den Zeichnungen zeigen:
- Fig. 1: eine schematische Darstellung einer erfindungsgemäßen Vorrichtung zum Kommissionieren in einem ersten Zustand,
- Fig. 2: die Vorrichtung der Fig. 1 in einem zweiten Zustand,
- Fig. 3: die Vorrichtung der Fig. 1 in einem dritten Zustand,
- Fig. 4: die Vorrichtung der Fig. 1 in einem vierten Zustand,
- Fig. 5: die Vorrichtung der Fig. 1 in einem fünften Zustand,
- Fig. 6: die Vorrichtung der Fig. 1 in einem sechsten Zustand,
- Fig. 7: die Vorrichtung der Fig. 1 in einem siebten Zustand,
- Fig. 8: die Vorrichtung der Fig. 1 in einem achten Zustand,
- Fig. 9: eine zweite Ausführungsform der Vorrichtung der Fig. 1 in dem ersten Zustand,
- Fig. 10: eine schematische Draufsicht auf die Vorrichtung der Fig. 1,
- Fig. 11: eine weitere schematische Draufsicht auf die Vorrichtung der Fig. 1,
- Fig. 12: eine schematische Schnittansicht der Vorrichtung der Fig. 1, wobei die Schnittebene parallel zur Höhenrichtung des Kommissionierschachts angeordnet ist, und
- Fig. 13: eine weitere schematische Schnittansicht der Vorrichtung der Fig. 1, wobei die Schnittebene parallel zur Höhenrichtung des Kommissionierschachts, aber senkrecht zur Schnittebene der Fig. 12 angeordnet ist.

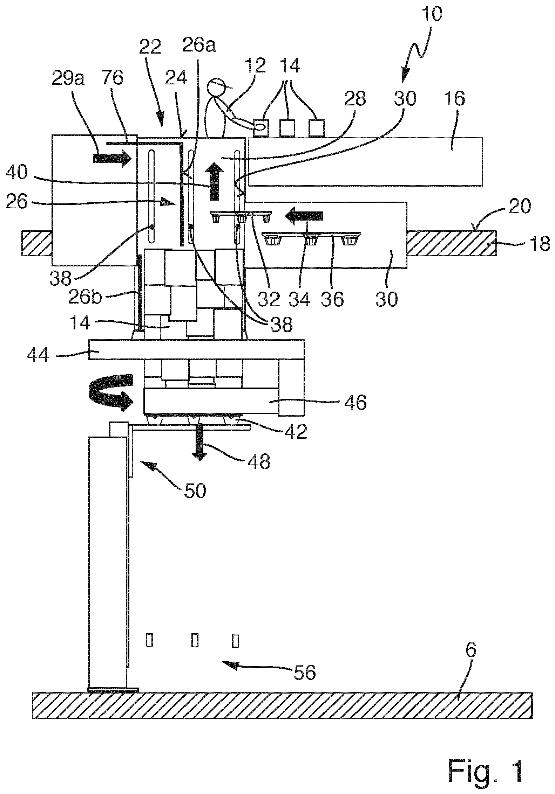

Fig. 1 zeigt eine erfindungsgemäße Vorrichtung 10 zum Kommissionieren. Die Vorrichtung 10 ist als manuelle Kommissionierstation ausgebildet und ein oder mehrere Kommissionierer 12 bewegen Ladegut 14, das mittels einer lediglich schematisch dargestellten Fördertechnik 16 angeliefert wird, auf eine zunächst unbeladene Palette. Die Vorrichtung 10 steht auf einem Hallenboden 6, auf dem auch die Fördertechnik 56 angeordnet ist.

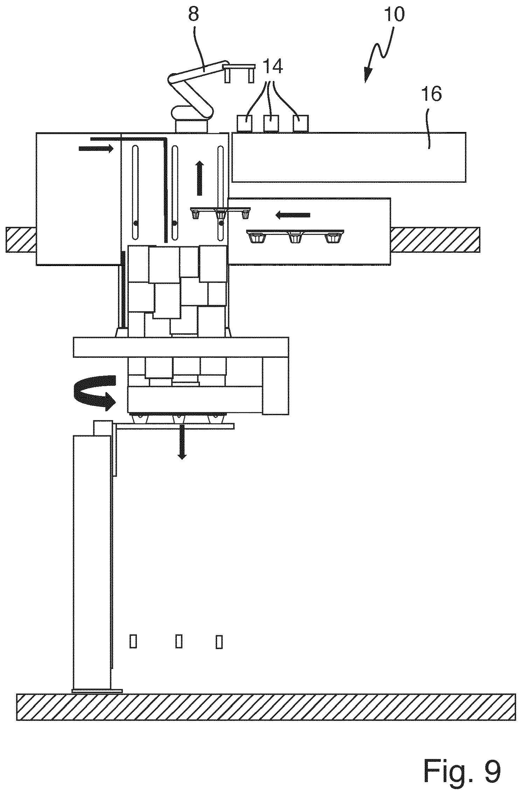

Im Unterschied zu Fig. 1 zeigt Fig. 9 eine automatische Kommissionierstation. Die Vorrichtung 10 weist bei der Ausbildung als automatische Kommissionierstation gemäß Fig. 9 einen Kommissionierroboter 8 auf, der, wie der Kommissionierer 12 bei der manuellen Kommissionierstation, Ladegut 14 von der Fördertechnik 16 abnimmt und auf eine zunächst unbeladene Palette bewegt.

Im Übrigen sind die als manuelle Kommissionierstation ausgebildete Vorrichtung 10 der Fig. 1 und die als automatische Kommissionierstation ausgebildete Vorrichtung 10 der Fig. 9 aber identisch aufgebaut. Im Rahmen der Erfindung ist es dabei möglich, die Vorrichtung 10 für einen Gemischtbetrieb auszubilden, bei dem also sowohl ein Kommissionierer 12 als auch ein Kommissionierroboter 8 vorgesehen sind, um gemeinsam eine zunächst unbeladene Palette mit Ladegut 14 zu beladen.

Die Vorrichtung 10 der Fig. 1 weist eine Kommissionierbühne 18 auf, deren Oberseite 20 eine Standfläche für einen oder zwei Kommissionierer 12 bildet. Ein Kommissionierschacht 22 erstreckt sich durch die Kommissionierbühne 18 hindurch. Ein oberes Ende des Kommissionierschachts 22 bildet Teil einer Kommissionierebene 24.

Fig. 1 ist eine schematische Darstellung, die den Blick in den Kommissionierschacht 22 hinein von der Seite her erlaubt. Aus diesem Grund sind lediglich drei Schachtwände des Kommissionierschachts 22 erkennbar, nämlich eine erste verstellbare Schachtwand 26, eine zweite verstellbare Schachtwand 28 und eine dritte, fest angeordnete Schachtwand 30. Gegenüber und parallel zur zweiten verstellbaren Schachtwand 28 ist eine dritte verstellbare Schachtwand angeordnet, die aber, wie erläutert, in Fig. 1 nicht dargestellt ist.

Die erste verstellbare Schachtwand 26 weist einen oberen Abschnitt 26a und einen unteren Abschnitt 26b auf. Im Zustand der Fig. 1 sind der obere Abschnitt 26a und der untere Abschnitt 26b in unterschiedlicher Weise verstellt worden. Dies wird nachfolgend noch erläutert. Sowohl der obere Abschnitt 26a als auch der untere Abschnitt 26b der ersten verstellbaren Schachtwand 26 können in und entgegen eines Pfeils 28 verstellt werden, also senkrecht zu einer Höhenrichtung des Kommissionierschachts 22.

Auf Höhe der Kommissionierbühne 18 ist ein Palettenzwischenspeicher 30 vorgesehen, der in Fig. 1 ebenfalls nur schematisch dargestellt ist, aber zwei Speicherplätze für Paletten unterschiedlicher Größe aufweist. Diese beiden Speicherplätze sind bei der Ausführungsform der Fig. 1 übereinander angeordnet. Im Zustand der Fig. 1 ist eine erste, kleinere Palette 32 gerade von einem oberen Speicherplatz des Palettenzwischenspeichers 30 mittels einer nicht dargestellten Zuführeinrichtung in horizontaler Richtung in den freien Querschnitt des Kommissionierschachts 22 teilweise hineinbewegt worden. Eine zweite, größere Palette 36 ist auf einem zweiten, unteren Speicherplatz des Palettenzwischenspeichers 30 angeordnet.

Die erste Palette 32 ist noch leer und damit nicht beladen. Die zweite Palette 36 ist ebenfalls leer und nicht beladen. Die beiden Speicherplätze des Palettenzwischenspeichers 30 sind ausschließlich für nicht beladene, leere Paletten 32, 36 vorgesehen.

Die erste, kleinere Palette 32 befindet sich bereits teilweise im freien Querschnitt des Kommissionierschachts 22. Wenn die Palette 32 mittels der Zuführeinrichtung vollständig in den freien Querschnitt des Kommissionierschachts 22 hineinbewegt worden ist, wird sie dort von Mitteln 38 zum Halten und Bewegen übernommen und kann dann gemäß dem Pfeil 40 in Höhenrichtung des Kommissionierschachts 22 nach oben bis zur Kommissionierebene 24 bewegt werden. Die erste Palette 32 wird mittels der Mittel 38 zum Halten und Bewegen so lange nach oben bewegt, bis eine Oberseite der ersten Palette 32 auf Höhe der Kommissionierebene 24 oder kurz unterhalb der Kommissionierebene 24 angeordnet ist. Während des Beladevorgangs der ersten Palette 32 bewegen die Mittel 38 zum Halten und Bewegen die Palette 32 entsprechend ihrem Ladezustand schrittweise nach unten, also entgegen dem Pfeil 40. Der Kommissionierer 12 kann Ladegut 14 damit immer annähernd auf Höhe der Kommissionierebene 24 anordnen.

Im Zustand der Fig. 1 ist eine dritte Palette 42 bereits vollständig beladen und ist unterhalb der Höhenposition des Palettenzwischenspeichers 30 angeordnet. Die dritte Palette 42 ist bereits unterhalb des unteren Endes des Kommissionierschachts 22 angeordnet, wobei dieses untere Ende des Kommissionierschachts 22 durch eine Umwickelvorrichtung 44 definiert ist. In der Umwickelvorrichtung 44 wird die vollständig beladene Palette 42 gerade mit Stretchfolie 46 umwickelt. Während dieses Umwickelvorgangs wird die vollständig oder teilweise beladene Palette 42 dabei gemäß dem Pfeil 48 nach unten abgesenkt. Dies geschieht mittels einer Hub- und Absenkeinrichtung 50. Auf der dritten Palette 42 ist in mehreren Lagen Ladegut 14 gestapelt. Während der unterste Stapel an Ladegut 14, der unmittelbar auf der Ladefläche der dritten Palette 42 aufliegt, gerade mittels Stretchfolie 46 umwickelt wird, befinden sich die oberen Lagen mit Ladegut 14 noch innerhalb des unteren Abschnitts 26b des Kommissionierschachts 22. Es ist dadurch sichergestellt, dass das Ladegut 14 nicht von der dritten Palette 42 herunterfallen kann.

Es ist in Fig. 1 zu erkennen, dass der untere Abschnitt 26b der ersten verstellbaren Schachtwand 26 unmittelbar angrenzend an die oberen Lagen aus Ladegut 14 auf der dritten Palette 42 angeordnet ist. Der obere Abschnitt 26a der ersten verstellbaren Schachtwand 26 ist hingegen ein Stück weit in den freien Querschnitt des Kommissionierschachts 22 hineingefahren worden. Die erste verstellbare Schachtwand 26 ist dadurch mit ihrem oberen Abschnitt 26a bereits auf die Größe der ersten, kleineren Palette 32 eingestellt worden, wohingegen der untere Abschnitt 26b noch auf die Abmessungen der großen Palette 42 beziehungsweise des Stapels aus Ladegut 14 auf der Palette 42 eingestellt ist.

Die zweite verstellbare Schachtwand 28 und die gegenüberliegende, nicht erkennbare dritte verstellbare Schachtwand sind ebenfalls bereits ein Stück weit verstellt worden, um die erste, kleinere Palette 32 aufnehmen zu können. Wie noch erläutert werden wird, werden die zweite verstellbare Schachtwand 28 und die gegenüberliegende dritte verstellbare Schachtwand dabei so verstellt, dass sich der Abstand zwischen der zweiten verstellbaren Schachtwand und der dritten verstellbaren Schachtwand vergrößert. Dies, um die erste, kleinere Palette 32 aufzunehmen, die in einer Richtung senkrecht zur Zeichenebene der Fig. 1 länger ist als die große zweite Palette 36 und die große dritte Palette 42.

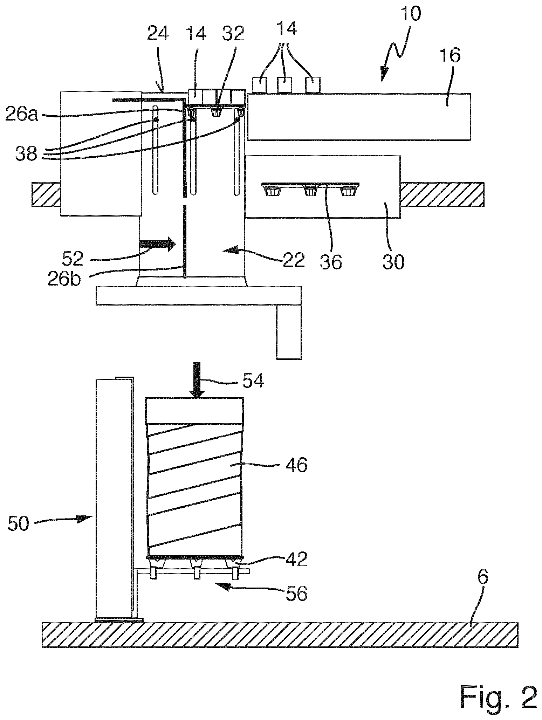

Auf den Zustand der Fig. 1 folgt der Zustand der Fig. 2 der Vorrichtung 10. Der Kommissionierer 12 ist in Fig. 2 aus Gründen der Übersichtlichkeit nicht mehr dargestellt. Im Zustand der Fig. 2 hat der Kommissionierer 12 aber bereits eine erste Lage an Ladegut 14 auf der ersten, kleineren Palette 32 angeordnet. Die erste Palette 32 kann nun mit Hilfe der Mittel 38 zum Halten und Bewegen ein Stück weit abgesenkt werden, was im Zustand der Fig. 2 bereits geschehen ist. Die Oberseite des auf der Palette 32 gestapelten Ladeguts liegt dadurch bereits wieder in etwa auf Höhe der Kommissionierebene 24 und der Kommissionierer 12 kann weiteres Ladegut 14, das mittels der Fördertechnik 16 angeliefert wird, auf die erste Lage an Ladegut 14 aufstapeln.

Im Zustand der Fig. 2 ist der obere Abschnitt 26a der ersten verstellbaren Schachtwand 26 unverändert so angeordnet, dass er angrenzend an die seitliche Begrenzung der Palette 32 angeordnet ist. Beim Absenken der Palette 32 ist dadurch sichergestellt, dass Ladegut 14 nicht seitlich von der Palette 32 herunterfallen kann. Der untere Abschnitt 26b der ersten verstellbaren Schachtwand wurde gegenüber dem Zustand der Fig. 1 gemäß dem Pfeil 52 in den freien Querschnitt des Kommissionierschachts 22 hineinbewegt. Der untere Abschnitt 26b fluchtet im Zustand der Fig. 2 mit dem oberen Abschnitt 26a der ersten verstellbaren Schachtwand 26. Der untere Abschnitt 26b kann im Zustand der Fig. 2 in den freien Querschnitt des Kommissionierschachts 22 hineinbewegt werden, da die große dritte Palette 42 bereits vollständig mit Stretchfolie 46 umwickelt wurde und gemäß dem Pfeil 54 mittels der Hub- und Absenkeinrichtung 50 nach unten bewegt wurde. Weder die dritte Palette 42 noch der Stapel an Ladegut auf der dritten Palette 42 befindet sich damit noch innerhalb des Kommissionierschachts 22.

Die Hub- und Absenkeinrichtung 50 übergibt die vollständig beladene Palette 42 auf eine lediglich schematisch dargestellte Fördertechnik 56, die für den Abtransport der vollständig beladenen dritten Palette 42 sorgt.

Die zweite Palette 36 befindet sich im Zustand der Fig. 2 unverändert auf ihrem Speicherplatz im Palettenzwischenspeicher 30.

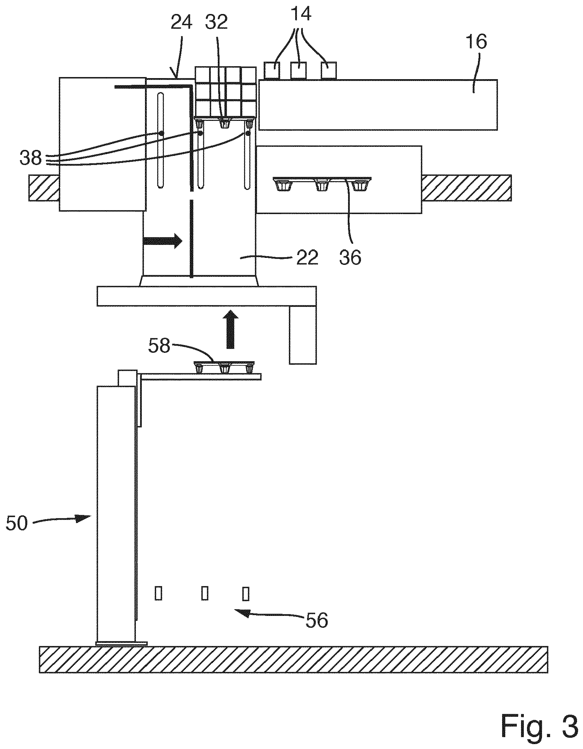

Im Zustand der Fig. 3 wurde die in Fig. 2 noch dargestellte vollständig beladene dritte Palette 42 abtransportiert und ist daher nicht mehr dargestellt. Mittels der Fördertechnik 56 wurde eine unbeladene vierte Palette 58 angeliefert und von der Hub- und Absenkeinrichtung 50 bereits übernommen. Im Zustand der Fig. 3 wird die vierte Palette 58 bereits nach oben in Richtung auf das untere Ende des Kommissionierschachts 22 transportiert.

Während die vierte unbeladene Palette 58 nach oben in den Kommissionierschacht 22 hineintransportiert wird, belädt der in Fig. 3 nicht dargestellte Kommissionierer 12 die erste Palette 32 weiter mit Ladegut 14, das über die Fördereinrichtung 16 herantransportiert wird. Im Zustand der Fig. 3 befinden sich bereits drei Lagen an Ladegut 14 auf der ersten Palette 32. Die erste Palette 32 wurde entsprechend ihrem Ladezustand schrittweise abgesenkt. Bevor der Kommissionierer 12 eine weitere Lage an Ladegut 14 auf die dann oberste Lage an Ladegut auf der ersten Palette 32 aufstapelt, wird diese durch die Mittel zum Halten und Bewegen 38 noch so weit abgesenkt, dass die Oberseite der obersten Lage an Ladegut sich dann auf oder etwas unterhalb der Höhe der Kommissionierebene 24 befindet.

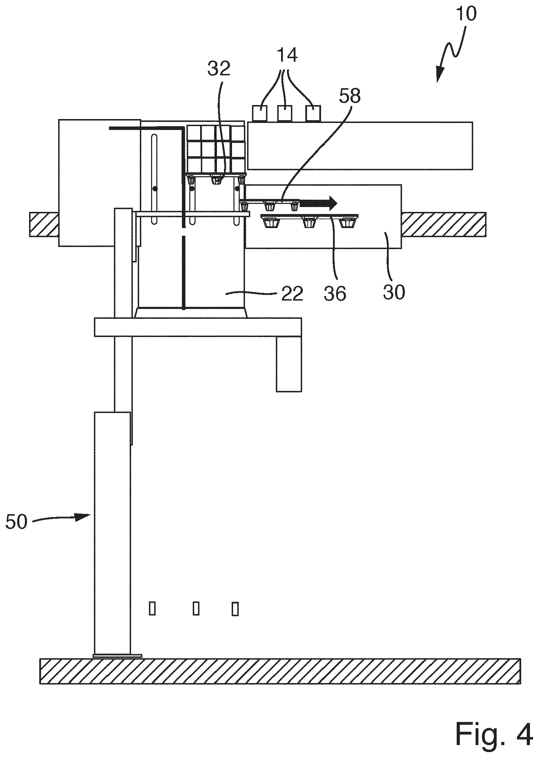

Im Zustand der Fig. 4 wurde die erste Palette 32, wie soeben beschrieben, ein Stück weit abgesenkt, so dass eine weitere Lage an Ladegut 14 aufgestapelt werden kann. Die Hub- und Absenkeinrichtung 50 hat die vierte Palette 58 auf Höhe des Palettenzwischenspeichers 30 von unten her in den Kommissionierschacht 22 eingebracht. Auf Höhe des zweiten, oberen Speicherplatzes übernimmt die nicht dargestellte Zuführeinrichtung die vierte Palette 58 und bewegt diese aus dem freien Querschnitt des Kommissionierschachts 22 heraus auf den ersten Speicherplatz des Palettenzwischenspeichers 30. Diese Bewegung erfolgt gemäß der schematischen Darstellung der Fig. 4 nach rechts. Sobald die vierte Palette 58 vollständig im Palettenzwischenspeicher 30 auf ihrem Speicherplatz angeordnet ist, stehen im Palettenzwischenspeicher 30 wieder eine kleine Palette und eine große Palette, nämlich die vierte Palette 58 und die zweite Palette 36, im unbeladenen Zustand zur Verfügung.

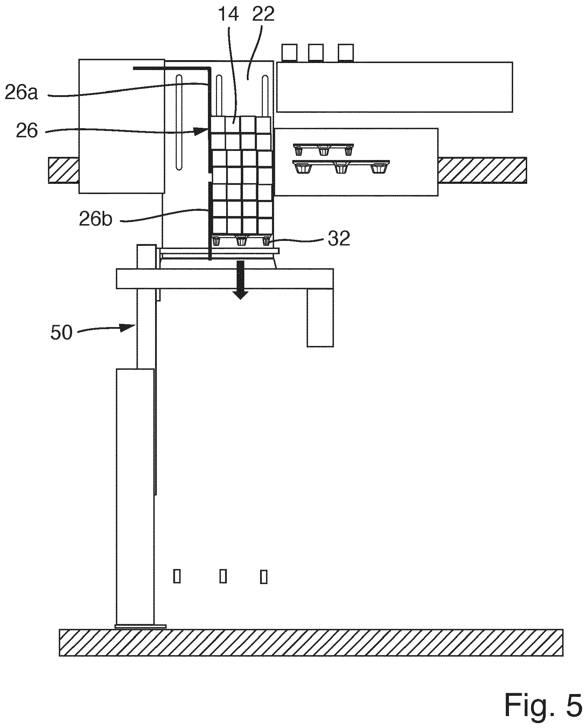

Fig. 5 zeigt einen auf den Zustand der Fig. 4 folgenden Zustand der Vorrichtung 10. Die erste Palette 32 wurde vollständig beladen und ist im Zustand der Fig. 5 bereits von den in Fig. 5 nicht erkennbaren Mitteln zum Halten und Bewegen an die Hub- und Absenkvorrichtung 50 übergeben worden. Die Hub- und Absenkvorrichtung 50 hat im Zustand der Fig. 5 die vollständig beladene Palette 32 bereits so weit abgesenkt, so dass diese sich kurz vor dem Ende des Kommissionierschachts 22 befindet. Der obere Abschnitt 26a und der untere Abschnitt 26b der ersten verstellbaren Schachtwand 26 befinden sich im Zustand der Fig. 5 unverändert in einer Position angrenzend an die Seitenkante der ersten Palette 32 beziehungsweise und angrenzend an den Stapel aus Ladegut 14 auf der ersten Palette 32. Dadurch wird verhindert, dass Ladegut 14 auf der Palette 32 seitlich in den Kommissionierschacht 32 hineinfällt.

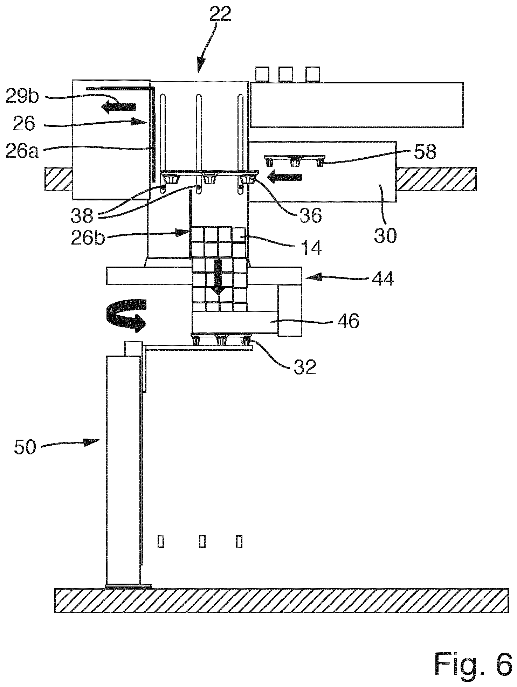

Im Zustand der Fig. 6, der auf den Zustand der Fig. 5 folgt, ist die erste Palette 32 mittels der Hub- und Absenkeinrichtung 50 bereits so weit abgesenkt worden, dass der Stapel an Ladegut auf der ersten Palette 32 in der Wickelstation 44 mit Stretchfolie 46 umwickelt werden kann. Die 14 obersten Lagen des Stapels an Ladegut 14 auf der ersten Palette 32 werden dabei seitlich noch von dem unteren Abschnitt 26b der ersten verstellbaren Schachtwand und von den weiteren Schachtwänden des Kommissionierschachts 22 gehalten. Die oberste Lage an Ladegut 14 auf der ersten Palette 32 ist bereits unterhalb der Höhenposition des Palettenzwischenspeichers 30 angeordnet. Aus dem Palettenzwischenspeicher 30 kann nun die große zweite unbeladene Palette 36 mittels der nicht dargestellten Zuführeinrichtung aus dem Palettenzwischenspeicher 30 entnommen werden und an die Mittel zum Halten und Bewegen 38 übergeben werden. Alternativ könnte auch die kleine vierte unbeladene Palette 58 aus dem Palettenzwischenspeicher 30 entnommen und an die Mittel zum Halten und Bewegen 38 übergeben werden.

Um die zweite, größere Palette 36 überhaupt in den Kommissionierschacht 22 einfahren zu können, ist der obere Abschnitt 26a der ersten verstellbaren Schachtwand 26 wieder in einer Richtung gemäß dem Pfeil 25 aus dem freien Querschnitt des Kommissionierschachts 22 herausbewegt worden, in Fig. 6 also nach links, um den freien Querschnitt des Kommissionierschachts 22 an die Abmessungen der zweiten, größeren Palette 36 anzupassen.

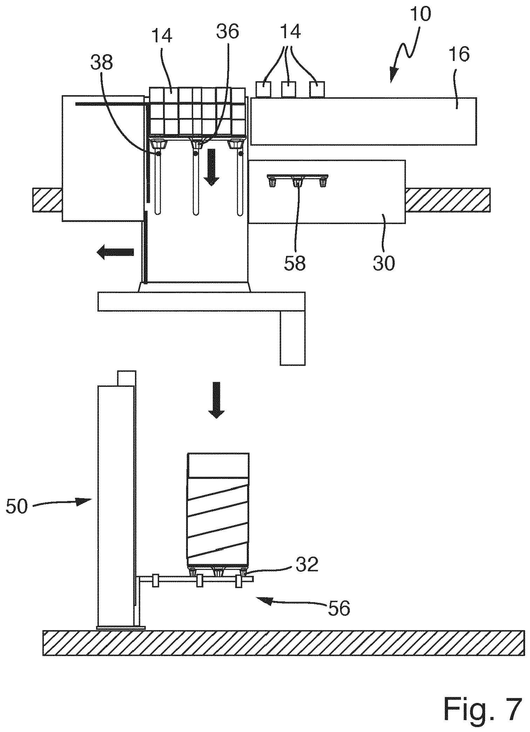

Im Zustand der Fig. 7, der auf den Zustand der Fig. 6 folgt, wird die zweite, größere Palette 36 bereits mit Ladegut 14 durch den nicht dargestellten Kommissionierer 12 beladen und entsprechend der Anzahl der Lagen auf der Palette 36 durch die Mittel zum Halten und Bewegen 38 schrittweise abgesenkt. Im Zustand der Fig. 7 sind bereits drei Lagen an Ladegut 14 auf der zweiten Palette 36 gestapelt. Auf den Zustand der Fig. 7 folgend senken die Mittel zum Halten und Bewegen 38 die zweite Palette 36 um die Höhe einer Lage an Ladegut 14 ab, so dass der Kommissionierer weiteres Ladegut 14 aufstapeln kann.

Wie in Fig. 7 zu erkennen ist, ist der zweite Speicherplatz im Palettenzwischenspeicher 30 leer und es befindet sich lediglich die kleine vierte Palette 58 im Palettenzwischenspeicher 30.

Die erste, vollständig beladene und umwickelte Palette 32 wird im Zustand der Fig. 7 gerade von der Hub- und Absenkeinrichtung 50 auf die Fördertechnik 56 übergeben.

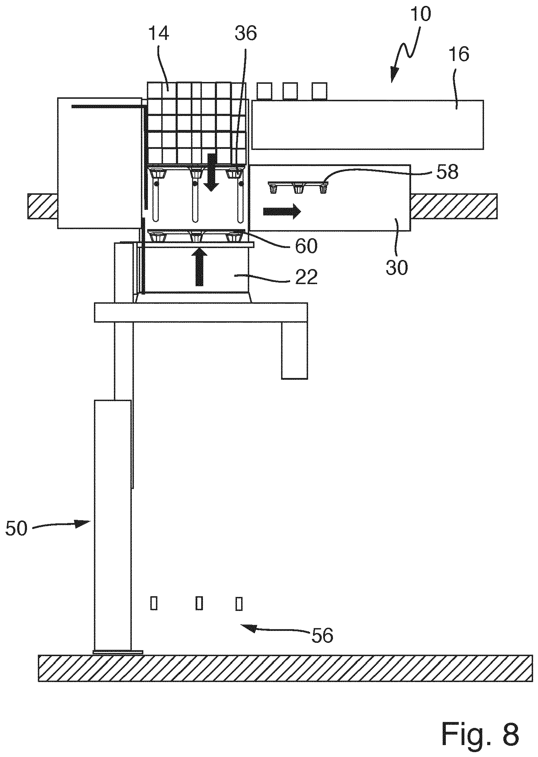

Im Zustand der Fig. 8 der Vorrichtung 10, der auf den Zustand der Fig. 7 folgt, ist die vollständig beladene und umwickelte erste Palette 32 bereits abtransportiert worden und nicht mehr dargestellt. Eine fünfte Palette 60 wurde über die Fördertechnik 56 angeliefert und von der Hub- und Absenkeinrichtung 50 bereits in den Kommissionierschacht 22 eingefahren. Die fünfte Palette 60 befindet sich noch kurz unterhalb der Höhenposition des Palettenzwischenspeichers 30, genauer gesagt kurz unterhalb der Höhenposition des zweiten Speicherplatzes in dem Palettenzwischenspeicher 30. Nachfolgend auf den Zustand der Fig. 8 wird die fünfte Palette 60 mittels der Hub- und Absenkeinrichtung 50 noch ein Stück weit angehoben bis auf die Höhenposition des zweiten Speicherplatzes im Palettenzwischenspeicher 30 und dann mittels der nicht dargestellten Zuführeinrichtung übernommen und in Fig. 8 nach rechts in den Palettenzwischenspeicher 30 eingebracht.

Wie Fig. 8 zu entnehmen ist, ist die zweite Palette 36 weiter beladen worden und im Zustand der Fig. 8 befinden sich bereits fünf Lagen an gestapeltem Ladegut 14 auf der zweiten Palette 36.

Wenn die fünfte Palette 60 sich im Palettenzwischenspeicher 30 befindet, ist der Querschnitt des Kommissionierschachts 22 unterhalb der zweiten Palette 36 frei, so dass diese weiter schrittweise abgesenkt werden kann, an die Hub- und Absenkeinrichtung 50 übergeben und dann mit Stretchfolie umwickelt werden kann.

Während des Umwickelns des Stapels an Ladegut 14 auf der zweiten Palette 36 kann dann entweder die vierte Palette 58 oder die fünfte Palette 60 aus dem Palettenzwischenspeicher 30 entnommen und in den Kommissionierschacht 22 eingebracht werden, um dann entweder die vierte, kleine Palette 58 oder die fünfte, große Palette 60 zu beladen. Die Entscheidung, ob eine kleine Palette oder eine große Palette beladen wird, wird dabei von einem nicht dargestellten Prozessrechner übernommen, der auch dafür sorgt, dass das für die jeweilige Palette vorgesehene Ladegut 14 über die Fördertechnik 16 angeliefert wird.

Mit der erfindungsgemäßen Vorrichtung 10 können dabei auch unmittelbar hintereinander Paletten unterschiedlicher Größe beladen werden. Die erfindungsgemäße Vorrichtung 10 ist dadurch in äußerst flexibler Weise einsetzbar.

Fig. 9 zeigt, wie bereits ausgeführt wurde, die Vorrichtung 10 gemäß einer zweiten Ausführungsform. Anstelle eines Kommissionierers 12 ist bei der Vorrichtung 10 ein Kommissionierroboter 8 vorgesehen, der Ladegut 14 von der Fördertechnik 16 übernimmt und auf einer im Kommissionierschacht 22 bereitgestellten Palette positioniert. Wie ausgeführt wurde, kann neben dem Kommissionierroboter 8 auch ein Kommissionierer 12 arbeiten. Die Vorrichtung 10 wird mit dem Kommissionierroboter 8 aber im Übrigen in gleicher Weise betrieben, wie anhand der Fig. 1 bis 8 bereits beschrieben wurde.

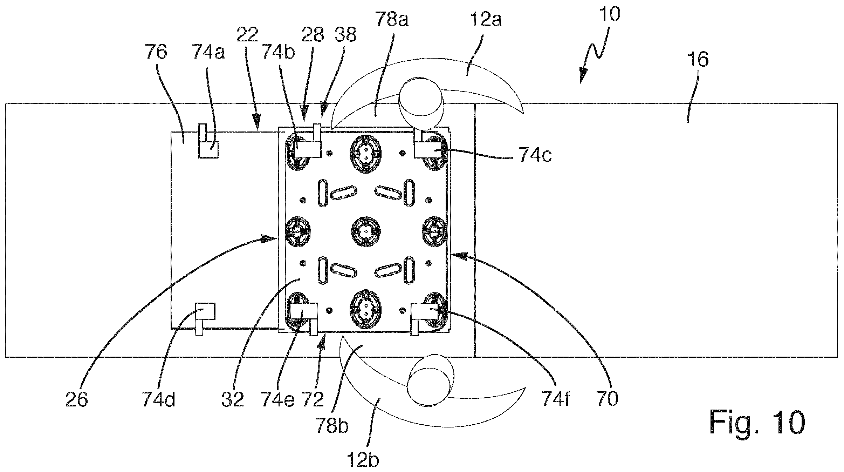

Fig. 10 zeigt eine schematische Draufsicht auf die Vorrichtung 10. Zwei Kommissionierer 12a, 12b sind schematisch dargestellt und sind dafür vorgesehen, in Fig. 10 nicht dargestelltes Ladegut von der Fördertechnik 16 zu übernehmen und auf eine Palette 32 zu bewegen, deren Oberseite bzw. Ladefläche auf Höhe der Kommissionierebene angeordnet ist. In Fig. 10 ist die kleinere, erste Palette 32 dargestellt. In Fig. 10 ist zu erkennen, dass die erste verstellbare Schachtwand 26 in den freien Querschnitt des Kommissionierschachts 22 hineinbewegt wurde und nun unmittelbar angrenzend an die in Fig. 10 linke Seitenkante der Palette 32 angeordnet ist. Gegenüberliegend der ersten verstellbaren Schachtwand 26 ist eine vierte, feste Schachtwand 70 angeordnet, die ebenfalls unmittelbar angrenzend an die in Fig. 10 rechte Seitenkante der Palette 32 angeordnet ist.

In Fig. 10 oben ist die zweite verstellbare Schachtwand 28 zu erkennen, die ein Stück weit aus dem freien Querschnitt des Kommissionierschachts 22 herausbewegt wurde. Die zweite verstellbare Schachtwand ist im Zustand der Fig. 10 ebenfalls unmittelbar angrenzend an die in Fig. 10 oben liegende Kante der Palette 32 angeordnet.

In Fig. 10 ist nun auch die dritte verstellbare Schachtwand 72 zu erkennen, die gegenüberliegend der zweiten verstellbaren Schachtwand 28 liegt. Die dritte verstellbare Schachtwand wurde ebenfalls ein Stück weit aus dem freien Querschnitt des Kommissionierschachts 22 herausbewegt und ist nun unmittelbar angrenzend an die in Fig. 10 untere Kante der Palette 32 angeordnet. Der freie Querschnitt des Kommissionierschachts 22 ist somit auf Höhe der Kommissionierebene auf die Größe der Ladefläche der Palette 32 eingestellt worden, so dass zwischen der Außenkontur der Ladefläche der kleinen Palette 32 und den Schachtwänden 26, 28, 70, 72 nur ein schmaler umlaufender Spalt vorhanden ist.

Es ist in der schematischen Draufsicht der Fig. 10 zu erkennen, dass die Kommissionierer 12a, 12b nun Ladegut von der Fördereinrichtung 16 übernehmen können und auf die Palette 32 auflegen können. Da die Schachtwände 26, 28, 70 und 72 des Kommissionierschachts 22 unmittelbar benachbart zu an die Kanten der Palette 32 angeordnet sind, ist nicht zu befürchten, dass Ladegut von der Palette 32 herunter und in den Kommissionierschacht 32 hineinfällt. Die Kommissionierer 12 können Ladegut sogar gegen eine der Schachtwände 26, 28, 70, 72 drücken und diese als Anschlag beim Auflegen von Ladegut verwenden.

In Fig. 10 sind schematisch die Mittel 38 zum Halten und Bewegen der Palette 32 dargestellt. Die Mittel 38 weisen insgesamt sechs Palettenauflager 74a, 74b, 74c, 74d, 74e und 74f auf. In der Draufsicht der Fig. 10 wären die Palettenauflager 74 an und für sich nicht zu erkennen, da sie unter der Palette 32 angeordnet sind, zur Verdeutlichung sind sie aber in Fig. 10 eingezeichnet.

Die Palette 32 liegt mit vier ihrer Standfüße auf den Palettenauflagern 74b, 74c, 74e und 74f auf. Wie ausgeführt wurde, wären die Palettenauflager 74b, 74c, 74e, 74f an und für sich in der Draufsicht der Fig. 10 nicht zu erkennen, da sie unterhalb der Palette 32 angeordnet sind. Die Palettenauflager 74a, 74d werden im Zustand der Fig. 10 nicht benutzt und wären an und für sich ebenfalls nicht zu erkennen, da sie unterhalb eines Abschnitts 76 angeordnet sind, der waagrecht angeordnet ist und der mit der ersten verstellbaren Schachtwand 26 verbunden ist.

Es ist in Fig. 10 zu erkennen, dass eine Wand 78b zwischen dem in Fig. 10 unteren Kommissionierer 12b und der Palette 32 sowie auch eine Wand 78a zwischen dem in Fig. 10 oberen Kommissionierer 12a und der Palette 32 sehr schmal ist. Die beiden Kommissionierer 12 müssen sich daher nur unwesentlich über die Wände 78a, 78b beugen, um Ladegut von der Fördertechnik 16 auf die Palette 32 zu bewegen.

Dies wird dadurch erreicht, dass die Palettenauflager 74a bis 74f in einem oberen Abschnitt des Kommissionierschachts 22, der sich von der Standfläche 20 der Kommissionierbühne 18 aus bis zur Kommissionierebene 24 erstreckt, lediglich in und entgegen der Höhenrichtung des Kommissionierschachts 22 bewegt werden können. Erst unterhalb der Standfläche 20 der Kommissionierbühne 18 können die Palettenauflager 74a bis 74f aus dem freien Querschnitt des Kommissionierschachts 22 herausgeschwenkt oder herausbewegt werden, was nachfolgend noch beschrieben wird.

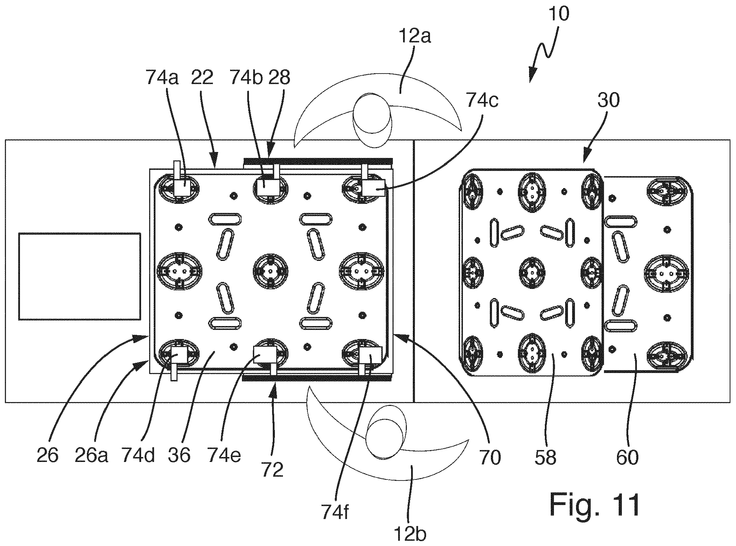

Fig. 11 zeigt eine weitere schematische Draufsicht auf die Vorrichtung 10. Im Unterschied zum Zustand der Fig. 10 ist nun eine zweite, größere Palette 36 im Kommissionierschacht 22 angeordnet. Um die zweite, größere Palette 36 im Kommissionierschacht 22 anzuordnen, vgl. Fig. 6 und Fig. 7, wurde die erste verstellbare Schachtwand 26 wenigstens im Bereich ihres oberen Abschnitts 26a aus dem freien Querschnitt des Kommissionierschachts 22 herausbewegt. In der Position der Fig. 11 ist jedenfalls der obere Abschnitt 26a der ersten verstellbaren Schachtwand 26 unmittelbar angrenzend an die in Fig. 11 linke Seitenkante der Palette 36 angeordnet.

Da die zweite, größere Palette 36 breiter ist als die erste, kleinere Palette 32, sind im Zustand der Fig. 11 die zweite verstellbare Schachtwand 28 und die dritte verstellbare Schachtwand 72 gegenüber dem Zustand der Fig. 10, ein Stück weit in den freien Querschnitt des Kommissionierschachts 22 hineinbewegt worden, so dass sie im Zustand der Fig. 11 unmittelbar angrenzend an die in Fig. 11 obere Kante bzw. untere Kante der Palette 36 angeordnet sind.

Die vierte feste Schachtwand 70 befindet sich ebenfalls unmittelbar angrenzend an die in Fig. 11 rechte Seitenkante der Palette 36. Der freie Querschnitt des Kommissionierschachts 22 ist somit auf Höhe der Kommissionierebene auf die Größe der Ladefläche der Palette 36 eingestellt worden, so dass zwischen der Außenkontur der großen Palette 36 und den Schachtwänden 26, 28, 70, 72 nur ein schmaler umlaufender Spalt vorhanden ist.

Die Palette 36 ruht mit sechs ihrer Standfüße auf jeweils einem der Palettenauflager 74a bis 74f.lm Rahmen der Erfindung können auch Paletten mit vier Standfüßen, Querbrettern statt Standfüßen oder einem umlaufenden Rahmen statt Standfüßen beladen und bewegt werden. Hierzu muss lediglich die Form und/oder Anordnung der Palettenauflager angepasst werden. Wie bereits anhand der Fig. 10 erläutert wurde, sind die Palettenauflager 74a bis 74f in der Draufsicht der Fig. 11 an und für sich nicht zu erkennen, da sie unterhalb der Palette 36 angeordnet sind, und sind lediglich zur Verdeutlichung dargestellt worden. An und für sich wären die Palettenauflager 74a bis 74f in der Draufsicht der Fig. 11 durch die Palette 36 verdeckt.

In Fig. 11 ist der in der Draufsicht an und für sich ebenfalls nicht erkennbare Palettenzwischenspeicher 30 dargestellt. Speziell ist eine kleine, vierte Palette 58 und eine große, fünfte Palette 60 dargestellt. Die vierte, kleine Palette 58 befindet sich auf dem ersten Speicherplatz des Palettenzwischenspeichers 30, der oberhalb des zweiten Speicherplatzes im Palettenzwischenspeicher 30 angeordnet ist, wobei sich auf dem zweiten Speicherplatz die fünfte, große Palette 60 befindet.

Anhand der Fig. 11 ist zu erkennen, dass die kleinen Paletten 58 und die großen Paletten 36, 60 keine identischen Querabmessungen haben. Die kleine Palette 58 ist schmäler als die große Palette 60, dafür aber länger.

Das Kommissionieren auf den kleinen Paletten 58 und den großen Paletten 36, 60 wird durch die erfindungsgemäße Vorrichtung 10 dadurch ermöglicht, dass der Kommissionierschacht 22 durch drei verstellbare Schachtwände 26, 28, 72 und nur eine feste Schachtwand 70 begrenzt ist.

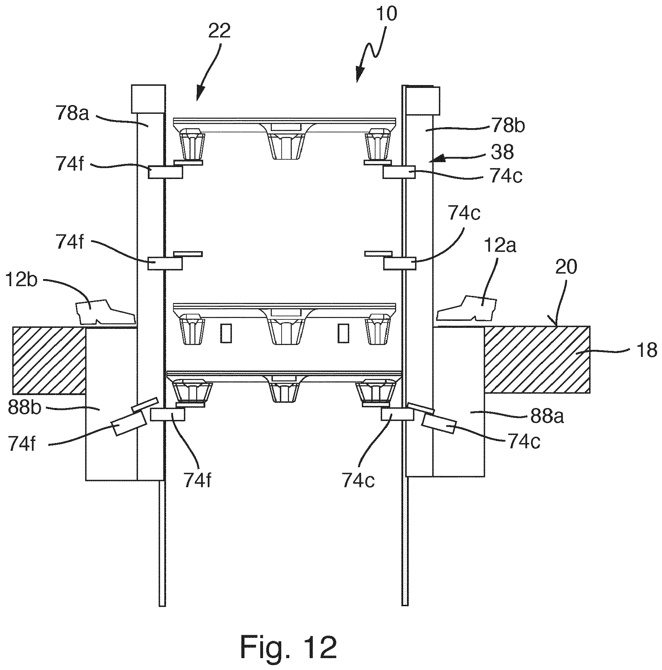

Fig. 12 zeigt eine schematische Schnittansicht der Vorrichtung 10 der Fig. 1. Die Schnittebene in Fig. 12 verläuft parallel zur Höhenrichtung des Kommissionierschachts 22, wobei die Darstellung der Fig. 12 schematisch ist.

Fig. 12 dient zur Verdeutlichung der Mittel zum Bewegen und Halten 38 und zeigt, wie die Palettenauflager 74a bis 74f der Mittel 38 zum Halten und Bewegen in den freien Querschnitt des Kommissionierschachts 22 hineinbewegt bzw. herausbewegt werden.

In Fig. 12 ist die Kommissionierbühne 18 zu erkennen, deren Oberseite die Standfläche 20 für die in Fig. 12 nur im Bereich ihrer Füße dargestellten Kommissionierer 12a, 12b bildet. Es ist Fig. 12 zu entnehmen, dass die Palettenauflager 74a bis 74f, wobei in Fig. 12 lediglich zwei Palettenauflager 74c und 74f in unterschiedlichen Bewegungszuständen dargestellt sind, unterhalb der Standfläche 20 aus dem freien Querschnitt des Kommissionierschachts 22 herausbewegt werden können. Hierzu werden die Palettenauflager 74 beispielsweise entlang einer Kurvenbahn herausgeschwenkt oder beispielsweise auch nur um eine Drehachse geschwenkt oder gekippt. Um eine solche Bewegung durchführen zu können, wird seitlich der betreffenden Schachtwand des Kommissionierschachts 22 vergleichsweise viel Platz benötigt. Dieser Platz steht unterhalb der Standfläche 22 zur Verfügung und in Fig. 12 ist hierzu schematisch jeweils ein Hohlraum 88a, 88b unter der Standfläche 20 eingezeichnet

Oberhalb der Standfläche 20 können die Palettenauflager 74a bis 74f hingegen lediglich in und entgegen der Höhenrichtung des Kommissionierschachts 22 bewegt werden. Dies ist anhand unterschiedlicher Positionen der beiden Palettenauflager 74c und 74f in Fig. 12 dargestellt. Erst nachdem die Palettenauflager 74a bis 74f wieder unterhalb der Standfläche 20 angeordnet sind, können sie weggeschwenkt, weggekippt oder wegbewegt werden, um dadurch den Querschnitt des Kommissionierschachts 22 wieder freizugeben. Die Palettenauflager 74a bis 74f sind hierzu beispielsweise in Verschiebeführungen geführt und werden mit einer geeigneten Antriebstechnik bewegt.

Fig. 12 zeigt also mehrere zeitlich aufeinanderfolgende Zustände gleichzeitig, um zu verdeutlichen, wie die beiden Palettenauflager 74c, 74f zunächst in den freien Querschnitt des Kommissionierschachts 22 hineinbewegt und dann nach oben, zum oberen Ende des Kommissionierschachts 22 bewegt werden.

Indem die Palettenauflager 74a bis 74f oberhalb der Standfläche 20 nicht aus dem freien Querschnitt des Kommissionierschachts 22 herausbewegt werden können, sondern nur in und entgegen der Höhenrichtung des Kommissionierschachts 22 bewegt werden können, können die Wände 78a und 78b des Kommissionierschachts 22 sehr schmal ausgeführt werden. Die beiden Kommissionierer 12a, 12b müssen sich daher nicht weit über die obere Begrenzung dieser beiden Wände 78a, 78b beugen, um Ladegut auf eine im Kommissionierschacht 22 angeordnete Palette zu bewegen.

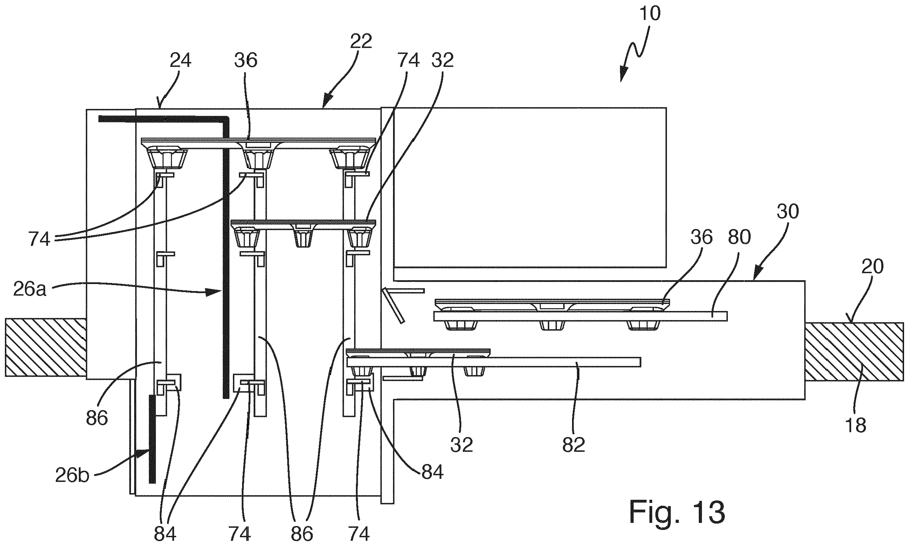

Fig. 13 zeigt eine schematische Schnittansicht der Vorrichtung 10, wobei die Schnittebene parallel zur Höhenrichtung des Kommissionierschachts 22 verläuft. Die Schnittebene in Fig. 13 ist aber senkrecht zur Schnittebene der Fig. 12 angeordnet. Wie ausgeführt wurde, ist die Darstellung der Fig. 13 schematisch. Zu erkennen ist die Kommissionierbühne 18 und der Palettenzwischenspeicher 30. Der erste Speicherplatz im Palettenzwischenspeicher 30 ist durch eine große Palette 36 belegt. Diese große Palette 36 ist in einem Halter 80 der Zuführeinrichtung angeordnet. Dieser Halter kann in horizontaler Richtung, in Fig. 13 also nach links, in den Kommissionierschacht 22 hinein und wieder zurück bewegt werden. Der Halter 80 nimmt die Standfüße der Palette 36 auf.

Der zweite Speicherplatz im Palettenzwischenspeicher 30 ist durch eine kleine Palette 32 belegt. Die Palette 32 ist in einem zweiten Halter 82 der Zuführeinrichtung angeordnet. Der zweite Halter 82 kann zusammen mit der Palette 32 in horizontaler Richtung nach links, in den Kommissionierschacht 22 hinein und wieder zurück bewegt werden. Im Zustand der Fig. 13 ist der zweite Halter 82 bereits ein Stück weit in den Kommissionierschacht 22 hineinbewegt worden.

Ausgehend vom Zustand der Fig. 13 wird der zweite Halter 82 weiter nach links, in den Kommissionierschacht 22 hineinbewegt, bis die Standfüße der Palette 32 oberhalb der Palettenauflager 74 angeordnet sind. Die Palette 32 kann dann auf den Palettenauflagern 74 abgestellt werden und der zweite Halter 82 kann wieder zurückgezogen werden, so dass er aus dem freien Querschnitt des Kommissionierschachts 22 herausbewegt wird. Beispielsweise heben die Palettenauflager 74 die Palette 32 ein Stück weit an, so dass der Halter 82 von der Palette 32 frei kommt und in den Palettenspeicher 30 zurückbewegt werden kann.

Mittels der Palettenauflager 74 kann die Palette 32 dann nach oben bewegt werden, was in Fig. 13 schematisch dargestellt ist.

Fig. 13 verdeutlicht somit mehrere aufeinanderfolgende Zustände gleichzeitig, um den Bewegungsablauf zu verdeutlichen.

Die große Palette 36 würde in gleicher Weise mittels des ersten Halters 80 in den freien Querschnitt des Kommissionierschachts 22 eingefahren und dort mit ihren Standfüßen auf den Palettenauflagern 74 abgestellt. Die Palette 36 kann dann im Kommissionierschacht 22 in Richtung auf das obere Ende des Kommissionierschachts 32 bewegt werden, was in Fig. 13 schematisch dargestellt ist.

Ebenfalls noch in Fig. 13 eingezeichnet ist der obere Abschnitt 26a der ersten verstellbaren Schachtwand und der untere Abschnitt 26b der ersten verstellbaren Schachtwand 26. Der obere Abschnitt 26a ist im Zustand der Fig. 13 in den freien Querschnitt des Kommissionierschachts 22 hineinbewegt worden, um dadurch den freien Querschnitt des Kommissionierschachts 22 auf die Größe der Ladefläche der kleinen Palette 32 einzustellen, so dass seitlich der kleinen Palette 32 nur ein schmaler Spalt vorhanden ist.

Der untere Abschnitt 26b ist hingegen in einer zurückgezogenen Stellung dargestellt, so dass auf Höhe des unteren Abschnitts 26b also eine große Palette 36 im Kommissionierschacht 22 bewegt und beispielsweise in den Palettenzwischenspeicher 30 eingebracht werden kann, vgl. hierzu die Darstellungen der Fig. 8 und 9.

Fig. 13 zeigt vertikal angeordnete Führungen 86 für die Palettenauflager 74. Entlang dieser schematisch dargestellten Führungen 86 können die Palettenauflager 74 in und entgegen der Höhenrichtung des Kommissionierschachts 22 verschoben werden. Unterhalb der Kommissionierbühne 18 sind Durchbrechungen 84 in der Schachtwand des Kommissionierschachts 22 dargestellt. Durch diese Durchbrechungen 84 können die Palettenauflager 74 aus dem freien Querschnitt des Kommissionierschachts 22 herausbewegt werden, beispielsweise herausgeschwenkt werden.

Im Zustand der Fig. 13 wird die kleine Palette 32 aus dem Palettenzwischenspeicher 30 entnommen und nach oben bis kurz unter die Höhe der Kommissionierebene 24 bewegt, um dort beladen zu werden. Der zweite Speicherplatz im Palettenzwischenspeicher 30 ist dann leer. Es wird dann wieder eine kleine Palette in den Palettenzwischenspeicher 30 eingebracht, um den leeren Speicherplatz zu füllen und damit immer eine große Palette und eine kleine Palette im Palettenzwischenspeicher 30 vorhanden sind. Je nach Anforderung eines nicht dargestellten Leitrechners wird dann entweder eine große Palette oder eine kleine Palette aus dem Palettenzwischenspeicher entnommen und zum Beladen nach oben auf Höhe der Kommissionierebene 24 gebracht.

Im Normalbetrieb der Vorrichtung 10 werden zu beladende Paletten immer aus dem Palettenzwischenspeicher 30 entnommen. Es ist aber mit der Vorrichtung 30 ebenfalls möglich, eine unbeladene Palette mittels der Hub- und Absenkeinrichtung 50 anzuheben und unmittelbar an die Mittel 38 zum Halten und Bewegen zu übergeben und dann zum Beladen auf Höhe der Kommissionierebene 24 zu bewegen.

### Bezugszeichenliste

- 6: Hallenboden
- 8: Kommissionierarbeiter
- 10: Vorrichtung
- 12: Kommissionierer
- 14: Ladegut
- 16: Fördereinrichtung
- 18: Kommissionierbühne
- 20: Standfläche
- 22: Kommissionierschacht
- 24: Kommissionierebene
- 26: erste verstellbare Schachtwand
- 26a: oberer Abschnitt der ersten Schachtwand
- 26b: unterer Abschnitt der ersten Schachtwand
- 28: Pfeil
- 29: Pfeil
- 30: Palettenzwischenspeicher
- 32: erste Palette
- 34: Pfeil
- 36: zweite Palette
- 38: Mittel zum Bewegen und Halten
- 40: Pfeil
- 42: dritte Palette
- 44: Umwickler
- 46: Stretchfolie
- 48: Pfeil
- 50: Hub- und Absenkeinrichtung
- 52: Pfeil
- 54: Pfeil
- 56: Förderanlage
- 58: fünfte Palette
- 60: sechste Palette
- 62 bis 68: nicht vergeben
- 70: vierte Schachtwand
- 72: dritte Schachtwand
- 74a bis 74f: Palettenauflager
- 76: Abschnitt
- 78a, 78b: Wände des Kommissionierschachts
- 80: erster Halter der Zuführeinrichtung
- 82: zweiter Halter der Zuführeinrichtung
- 84: Durchbrechung in der Schachtwand des Kommissionierschachts
- 86: Führungen
- 88a, 88b: Hohlraum

## Patentansprüche

1. Vorrichtung zum Kommissionieren auf Paletten oder Warenträgern,
- mit einem Kommissionierschacht (22),
- mit einem Palettenzwischenspeicher (30) für unbeladene Paletten, wobei der Palettenzwischenspeicher (30) seitlich neben dem Kommissionierschacht (22) angeordnet ist,
- mit einer Zuführeinrichtung für den Transport jeweils einer unbeladenen Palette (32, 36) vom Kommissionierschacht (22) in den Palettenzwischenspeicher (30) oder vom Palettenzwischenspeicher (30) in den Kommissionierschacht (22),
- **dadurch gekennzeichnet, dass**
- der Palettenzwischenspeicher (30) wenigstens zwei Speicherplätze für Paletten (32, 36) unterschiedlicher Größe aufweist.

2. Vorrichtung nach Anspruch 1, **dadurch gekennzeichnet, dass** die wenigstens zwei Speicherplätze im Palettenzwischenspeicher (30) in Höhenrichtung des Kommissionierschachts (22) übereinander angeordnet sind.

3. Vorrichtung nach Anspruch 1 oder 2, **dadurch gekennzeichnet, dass** eine Hub- und Absenkeinrichtung (50) vorgesehen ist, um eine unbeladene (36, 38) Palette bis auf Höhe des Palettenzwischenspeichers (30) zu bewegen.

4. Vorrichtung nach wenigstens einem der vorstehenden Ansprüche, **dadurch gekennzeichnet, dass** der Kommissionierschacht (22) wenigstens eine erste verstellbare Schachtwand (26) aufweist, wobei mittels der ersten verstellbaren Schachtwand (26) ein freier Querschnitt des Kommissionierschachts (22) mittels einer Bewegung der ersten verstellbaren Schachtwand (26) senkrecht zur Höhenrichtung des Kommissionierschachts (22) wenigstens abschnittsweise verändert werden kann, wobei die erste verstellbare Schachtwand (26) in Höhenrichtung des Kommissionierschachts (22) einen oberen Abschnitt (26a) und einen unteren Abschnitt (26b) aufweist, wobei der obere Abschnitt (26a) sich von einer Höhenposition des Palettenzwischenspeichers (30) bis zu einer Kommissionierebene (24) am oberen Ende des Kommissionierschachts (22) erstreckt,
wobei der untere Abschnitt (26b) sich ausgehend von der Höhenposition des Palettenzwischenspeichers (30) nach unten erstreckt,
und wobei der obere Abschnitt (26a) und der untere Abschnitt (26b) unabhängig voneinander verstellbar sind.

5. Vorrichtung nach Anspruch 4, **dadurch gekennzeichnet, dass** der obere Abschnitt (26a) der verstellbaren Schachtwand (26) mit einem horizontal angeordneten Abschnitt (76) der Kommissionierebene (24) verbunden ist.

6. Vorrichtung nach Anspruch 4 oder 5, **dadurch gekennzeichnet, dass** eine zweite, wenigstens abschnittsweise verstellbare Schachtwand (28) vorgesehen ist, wobei die zweite verstellbare Schachtwand (28) senkrecht zu der ersten verstellbaren Schachtwand (26) angeordnet ist und wobei mittels der zweiten verstellbaren Schachtwand (28) ein freier Querschnitt des Kommissionierschachts (22) mittels einer Bewegung der zweiten verstellbaren Schachtwand (28) senkrecht zur Höhenrichtung des Kommissionierschachts (22) wenigstens abschnittsweise verändert werden kann.

7. Vorrichtung nach Anspruch 6, **dadurch gekennzeichnet, dass** eine dritte, wenigstens abschnittsweise verstellbare Schachtwand (72) vorgesehen ist, wobei die dritte verstellbare Schachtwand (72) senkrecht zu der ersten verstellbaren Schachtwand (26) angeordnet ist und wobei mittels der dritten verstellbaren Schachtwand (72) ein freier Querschnitt des Kommissionierschachts (22) mittels einer Bewegung der dritten verstellbaren Schachtwand (72) senkrecht zur Höhenrichtung des Kommissionierschachts (22) wenigstens abschnittsweise verändert werden kann,

8. Vorrichtung zum Kommissionieren nach wenigstens einem der vorstehenden Ansprüche, **dadurch gekennzeichnet, dass** Mittel (38) zum Halten und Bewegen einer Palette (32, 36) im oberen Abschnitt des Kommissionierschachts (22) zwischen einer Höhenposition des Palettenzwischenspeichers (30) und einem oberen Ende des Kommissionierschachts (22) vorgesehen sind, wobei die Mittel zum Halten und Bewegen ausgebildet und angeordnet sind, eine unbeladene Palette (32, 36) aus dem Palettenzwischenspeicher (30) von der Zuführeinrichtung zu übernehmen, die unbeladene Palette (32, 36) bis zum oberen Ende des Kommissionierschachts (22) zu bewegen und während eines Beginns des Ladevorgangs die Palette (32, 36) schrittweise abzusenken, bis die Palette (32, 36) von den Mitteln (38) zum Halten und Bewegen an eine Hub- und Absenkvorrichtung (50) übergeben wird,
- wobei die Mittel (38) zum Halten und Bewegen mehrere Palettenauflager (74a, 74b, 74c, 74d, 74e, 74f) aufweisen, die in einen freien Querschnitt des Kommissionierschachts (22) hinein und aus dem freien Querschnitt herausbewegbar sind und wobei die Palettenauflager (74a, 74b, 74c, 74d, 74e, 74f) unterhalb einer Standfläche (20) für einen Kommissionierer (12a, 12b) oder einen Kommissionierroboter (8) in den freien Querschnitt des Kommissionierschachts (22) hinein und wieder herausbewegbar sind.

9. Vorrichtung nach Anspruch 8, **dadurch gekennzeichnet, dass** die Palettenauflager (74a, 74b, 74c, 74d, 74e, 74f) oberhalb der Standfläche (20) für einen Kommissionierer (12a, 12b) oder einen Kommissionierroboter ausschließlich in und entgegen der Höhenrichtung des Kommissionierschachts (22) bewegbar sind.

10. Verfahren zum Kommissionieren auf Paletten oder Warenträgern mit einer Vorrichtung nach wenigstens einem der vorstehenden Ansprüche.
